Europäisches Patentamt

European Patent Office

Office européen des brevets

(11) Numéro de publication: **0 338 171**
**A1**

(12) **DEMANDE DE BREVET EUROPEEN**

(21) Numéro de dépôt: **88400986.1**

(51) Int. Cl.⁴: **G09B 19/16**

(22) Date de dépôt: **21.04.88**

(43) Date de publication de la demande:
**25.10.89 Bulletin 89/43**

(84) Etats contractants désignés:
**AT BE CH DE ES GB IT LI LU NL SE**

(71) Demandeur: **Beltoise, Jean Pierre**
**25 La Vallée**
**F-91770 Saint Vrain(FR)**

(72) Inventeur: **Beltoise, Jean Pierre**
**25 La Vallée**
**F-91770 Saint Vrain(FR)**

(74) Mandataire: **DEGRET, Jacques**
**Cabinet Degret 24, place du Général Catroux**
**F-75017 Paris(FR)**

(54) **Dispositif pour l'enseignement de la conduite d'un véhicule automobile.**

(57) L'invention concerne un dispositif pour l'enseignement de la conduite à tenir en cas d'obstacles imprévus survenant devant un véhicule en mouvement.

Le dispositif comporte, d'une part, une rampe (3) qui est disposée transversalement à la voie (2) suivie par le véhicule (1), sur le bord de celle-ci, et qui inclinée vers le bas et vers la voie et, d'autre part, au moins un objet (7) propre à rouler par gravité sur la rampe (3) et à quitter celle-ci pour traverser la voie (2) de manière à constituer un obstacle mobile devant et/ou sur le côté du véhicule (1).

Fig 2

## DISPOSITIF POUR L'ENSEIGNEMENT DE LA CONDUITE D'UN VEHICULE AUTOMOBILE

La présente invention est relative à un dispositif pour l'enseignement de la conduite d'un véhicule automobile, et plus précisément à un dispositif de ce genre permettant à l'élève-conducteur d'acquérir une attitude correcte, voire de perfectionner ses aptitudes, au cas où un obstacle surgit brusquement et de manière inattendue, notamment devant le véhicule, et va à sa recontre de face ou de côté alors que ledit véhicule progresse.

Il est connu d'enseigner et/ou de perfectionner la conduite automobile à l'aide d'appareils simulateurs, et le brevet US-A-3.013.344 décrit un exemple type de réalisation d'un tel simulateur de conduite. Cet appareil comprend en effet une bande sans fin entraînée en continu, bande sur laquelle est dessinée la route que l'élève-pilote doit suivre, et un distributeur d'objets qui, sous la commande du moniteur, ou de façon programmée, dépose lesdits objets arbitrairement sur la route dessinée de façon à constituer autant d'obstacles que l'élève-pilote a alors mission d'éviter.

Toutefois, dans cet appareil, les obstacles simulés sont toujours situés en face de l'élève, à l'intérieur d'un cadre déterminé délimité par le profil de la route dessinée, et l'élève dispose par conséquent de quelques secondes ou fractions de seconde pour se préparer à éviter lesdits obstacles.

Cette constatation vaut pour tout obstacle, que celui-ci sout fixe ou mobile, c'est-à-dire animé d'une vitesse de déplacement de même sens ou de sens contraire au déplacement de la bande sur laquelle est dessinée la route, pour faire croire que l'obstacle est un véhicule à croiser ou, respectivement, un véhicule à doubler.

Les simulateurs de conduite ne permettent donc qu'un enseignement limité à certaines situations de conduite:

- tout obstacle que l'élève-pilote doit éviter n'est pas réellement inattendu, puisque l'élève dispose avant d'agir d'un temps raisonnable qui est au minimum celui que met la bande pour se déplacer du point situé à l'aplomb du distributeur d'obstacles jusqu'au point symbolisant le véhicule que conduit l'élève, et

- tout obstacle à éviter vient toujours de face à la recontre de l'élève, et il ne traverse jamais la route suivie par l'élève-pilote.

En outre, il est clair que ces simulateurs ne peuvent par essence que simuler une situation, et en conséquence ils ne permettent pas d'estimer quelle attitude adopte réellement l'élève-pilot lorsqu'il se trouve confronté à une difficulté inattendue et par suite ils ne peuvent non plus permettre de corriger toute mauvaise attitude ou toute mauvaise option de conduite.

La présente invention a pour but de fournir un dispositif qui, à la différence des simulateurs, permet à l'élève-pilote d'être confronté à des situations absolument imprévisibles, les obstacles venant à sa rencontre étant tout à fait inattendus, et qui au surplus permet à l'élève-pilote d'apprendre à réagir en présence d'obstacles situés face à lui et en présence d'obstacles venant de côté en direction du véhicule alors que ce dernier progresse.

Le dispositif selon l'invention est caractérisé par le fait qu'il comporte, d'une part, une rampe qui est disposée transversalement ou obliquement par rapport à la voie suivie par le véhicule, sur le bord de ladite voie, et qui est inclinée vers le bas et vers la voie et, d'autre part, au moins un objet propre à rouler par gravité le long de la rampe pour ensuite, en quittant ladite rampe, traverser ladite voie de manière à constituer un obstacle mobile devant et/ou sur le côté de véhicule.

Avec le dispositif selon l'invention il est donc possible de créer à tout moment un obstacle mobile qui surgit brusquement et de manière inattendue sur la voie suivie par le véhicule, ce qui permet d'accoutumer le conducteur à une telle situation et de lui faire acquérir les réactions nécessaires, soit pour contourner l'obstacle, soit pour s'arrêter, tout en pensant à éviter la sortie de route ainsi que le choc avec les autres véhicules qui le croisent ou le suivent sur la voie.

Le dispositif selon l'invention peut bien sûr être unique, ou au contraire appartenir à un ensemble de dispositifs analogues qui sont espacés le long de la voie.

L'objet est par exemple sphérique. Il peut appartenir à un ensemble d'objets qui soit sont identiques, soit sont au moins en partie différents quant à leur forme, leur volume et/ou leur densité.

La rampe est située dans un plan vertical, à la manière d'un toboggan, ce plan étant soit perpendiculaire à la direction de la voie, soit incliné sur celle-ci, vers l'avant ou l'arrière en considérant le sens de déplacement du véhicule. Dans le cas où il existe un ensemble de dispositifs échelonnés le long de la voie, les rampes successives peuvent être placées suivant des inclinaisons différentes, par rapport à la direction de la voie et/ou suivant des pentes différentes par rapport au sol.

La libération de l'objet, ou d'un groupe d'objets, depuis la partie supérieure de la rampe peut se faire soit de manière entièrement manuelle, soit de manière commandée, par exemple à distance, et/ou program mée.

La rampe peut comporter, à sa partie supérieure, une réserve d'une pluralité d'objets roulants qui sont normalement retenus puis libérés, soit à l'unité, soit par groupe en quantité déterminable, pour descendre par gravité sur la rampe.

On comprendra bien l'invention à la lecture de la description qui va suivre, et en référence au dessin annexé dans lequel :

- la figure 1 est une vue schématique en élévation d'un dispositif établi selon un mode de réalisation préféré de l'invention, et

- la figure 2 est une vue en plan du dispositif de la figure 1.

En référence au dessin, on a représenté un véhicule (1) circulant sur une voie (2). Sur un côté de la voie (2), par exemple sur la droite en considérant la direction (A) de circulation du véhicule (1), on prévoit une rampe (3) qui est disposée sensiblement transversalement à la voie (2), cette rampe étant inclinée vers le bas et vers la voie pour constituer une sorte de toboggan. La rampe (3) est supportée par exemple par des pieds (4) et elle comporte un fond (5) et deux joues latérales (6) définissant une gouttière. Le long et sur la rampe (3) peut rouler par gravité un objet (7), ou un groupe d'objets, qui est libéré depuis la partie supérieure de la rampe.

Lorsque l'objet (7) est libéré, il descend par gravité sur la rampe (3) en roulant, puis il quitte la rampe pour venir sur la voie (2) comme montré en traits mixtes. Il constitue alors pour le conducteur du véhicule (1) un obstacle mobile imprévu, ce qui permet au conducteur d'acquérir les réflexes nécessaires ou de perfectionner ces réflexes.

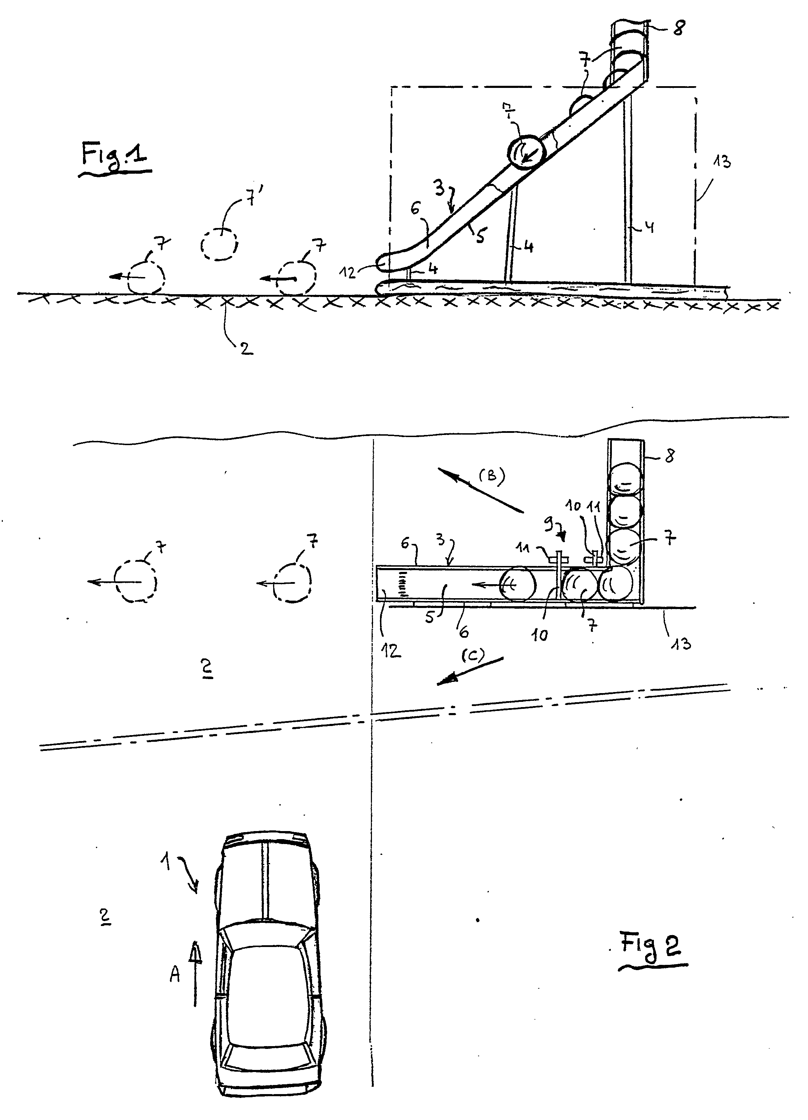

Si l'extrémité avant basse (12) de la rampe (3) est, par construction, disposée en surélévation par rapport à la voie (2), ainsi d'ailleurs qu'elle a été représentée à la figure 1, chaque objet (7) est avantageusement conçu à la manière d'un ballon, de façon qu'il rebondisse comme indiqué par (7′) lorsqu'il traverse la voie devant le véhicule.

En variante, si l'extrémité avant basse (12) de la rampe est, par construction, au niveau ou sensiblement au niveau de la voie (2), chaque objet (7) sera avantageusement conçu de manière à rouler sur la voie lorsqu'il traversera celle-ci.

La rampe (3) est située dans un plan vertical qui, comme représenté à la figure 2, est perpendiculaire à la direction (A). En variante, le plan vertical de la rampe peut être incliné vers l'avant (B) ou vers l'arrière (C) en considérant la direction (A).

On peut bien évidemment prévoir une pluralité de rampes (3) qui sont échelonnées le long de la voie (2), pour constituer autant de sources d'obstacle(s), lesdites rampes pouvant avoir des inclinaisons différentes relativement à la direction de la voie et/ou des pentes différentes par rapport au sol et/ou libérant des objets soit à l'unité, soit par groupe en quantité connue, mais différente d'une rampe à l'autre, de manière à constituer autant d'obstacles variés et inattendus pour l'élève-conducteur.

Chaque objet (7) est par exemple sphérique. Avantageusement, cet objet (7) appartient à un ensemble d'objets similaires qui sont soit identiques, soit au moins en partie différents les uns des autres quant à leur forme, leur volume et/ou leur densité. De préférence chaque objet (7) sera prévu à rebond élastique de façon à pouvoir être utilisé sur tous les types de rampe, avec sortie en surélévation ou au niveau du sol.

L'objet (7), ou un groupe d'objets (7), est libéré à la partie supérieure de la rampe soit de manière entièrement manuelle, par exemple par un assistant, soit de manière commandée, par exemple par le moniteur assis à côté de l'élève.

Dans le mode de réalisation préféré de l'invention, comme représenté sur le dessin, il existe une réserve d'objets (7) dont par exemple les deux premiers sont situés directement sur la rampe (3) et dont les autres sont situés sur une rampe inclinée d'approvisionnement (8) qui peut s'étendre transversalement à la rampe (3). En variante, la rampe (8) peut être remplacée par une goulotte ou par un trémis vertical.

Tout objet (7), dans ce cas, est libéré depuis la partie supérieure de la rampe (3), par des moyens (9) de retenue et de libération qui sont schématisés sur la figure 2 par deux volets (10) propres l'un et l'autre à basculer de 90° autour d'un axe (11) pour pouvoir successivement, d'une manière connue en elle-même, retenir le premier objet, le séparer du second objet, le libérer tout en retenant tous les suivants, puis permettre à ces derniers d'avancer d'un pas en vue de la libération du second objet. Les moyens (9) sont commandés et actionnés de manière à libérer successivement les objets (7) suivant les besoins.

En variante, sur certaines rampes, et selon des quantités déterminées, il peut être prévu d'espacer les deux volets (10) en sort qu'ils isolent non plus un objet, mais un groupe d'objets (7) qui seront donc libérés tous ensemble pour former autant d'obstacles mobiles devant le véhicule.

Enfin, de façon à éviter que, de loin, l'élève ne repère un ou plusieurs objets (7) roulant le long de la rampe qu'il va prochainement croiser avec son véhicule, et de façon à éviter qu'inconsciemment ou non l'élève se prépare à la rencontre d'au moins un obstacle, on peut associer à chaque rampe (3) et/ou aux pieds (4) de celle-ci un cache (13), tel une bâche, ou une plaque de bois, ou un camouflage d'arbres et de branches feuillues, que l'on place verticalement contre la rampe, au moins sur le côté d'où vient le véhicule.

A titre de simples exemples de construction, la rampe du dispositif proposé a avantageusement une longueur de quatre à six mètres et une inclinaison voisine de 30° ; cette rampe distribue des objets sphériques d'un diamètre important, compris entre 70 et 100 centimètres, tels qu'en volume, et du fait de leurs rebonds, ils simulent un enfant qui court, un homme qui marche, ou un homme assis sur une moto par exemple.

Bien entendu, l'invention n'est pas limitée aux modes de réalisation qui ont été décrits et l'on pourrait au contraire concevoir diverses variantes sans sortie pour autant de son cadre.

## Revendications

1. Dispositif pour l'enseignement de la conduite d'un véhicule automobile (1), caractérisé par le fait qu'il comporte, d'une part, une rampe (3) qui est disposée transversalement ou obliquement par rapport à la voie (2) suivie par le véhicule, sur le bord de ladite voie, et qui est inclinée vers le bas et vers la voie et, d'autre part, au moins un objet (7) propre à rouler par gravité le long de la rampe (3) pour ensuite, en quittant ladite rampe, traverser ladite voie (2) de manière à constituer un obstacle mobile devant et/ou sur le côté du véhicule (1).

2. Dispositif selon la revendication 1, caractérisé par le fait que la rampe (3) est située dans un plan vertical perpendiculaire à la direction de la voie (2).

3. Dispositif selon la revendication 1, caractérisé par le fait que la rampe (3) est située dans un plan vertical qui est incliné sur la direction de la voie (2), vers l'avant (B) ou vers l'arrière (C) en considérant le sens (A) de déplacement du véhicule (1).

4. Dispositif selon l'une des revendications 1 à 3, caractérisé par le fait que l'objet (7) est sphérique.

5. Dispositif selon l'une des revendications 1 à 4, caractérisé par le fait que l'objet (7) appartient à un ensemble d'objets identiques.

6. Dispositif selon l'une des revendications 1 à 4, caractérisé par le fait que l'objet (7) appartient à un ensemble d'objets au moins en partie différents quant à leur forme, leur volume et/ou leur densité.

7. Dispositif selon l'une des revendications 1 à 6, caractérisé par le fait qu'il comporte des moyens (9-11) pour libérer un par un, ou par groupe en quantité déterminable, les objets (7) stockés à la partie supérieure de la rampe (3).

8. Dispositif selon la revendication 7, caractérisé par le fait que les moyens (9-11) de libération d'un ou de plusieurs objets (7) sont du type à actionnement manuel ou du type à télécommande.

9. Dispositif selon l'une des revendications 7 et 8, caractérisé par le fait qu'il comporte, à la partie supérieure de la rampe, une réserve d'une pluralité d'objets roulants (7) qui sont retenus puis libérés un à un, ou par groupe en quantité déterminable, par lesdits moyens de libération (9-11).

10. Dispositif selon l'une des revendications 1 à 9, caractérisé par le fait que l'extrémité avant basse (12) de la rampe (3) est surélevée par rapport à la voie (2), l'objet (7) étant alors apte à rebondir sur la voie (2) à la manière d'un ballon (7') quand il la traverse.

11. Dispositif selon l'une des revendications 1 à 9, caractérisé par le fait que l'extrémité avant basse (12) de la rampe (3) est située sensiblement au niveau de la voie (2), l'objet (7) roulant sur la voie (2) quand il la traverse.

Fig.1

Fig 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 013 344 (L. SIMJIAN)<br>* Colonne 7, lignes 26-53; colonne 8; figures 1,2 *<br>--- | 1 | G 09 B 19/16 |
| Y | BE-A- 375 107 (W. BRUGATY)<br>* En entier * | 1 | |
| A | | 2-11 | |
| A | DE-A-2 639 749 (H. WINTER)<br>* Pages 1,2; figures 1-8 *<br>--- | 4,5,6 | |
| A | DE-A-2 632 313 (A. GAMBON)<br>* Page 1; revendication 1; figures 1,2 *<br>--- | 1 | |
| A | EP-A-0 035 086 (G. MICHEL)<br>----- | | |

**DOMAINES TECHNIQUES RECHERCHES (Int. Cl.4)**

G 09 B

Le présent rapport a été établi pour toutes les revendications

| Lieu de la recherche | Date d'achèvement de la recherche | Examinateur |
|---|---|---|
| LA HAYE | 25-11-1988 | ODGERS M.L. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant